(19) Europäisches Patentamt
European Patent Office
Office européen des brevets

(11) **EP 2 518 556 A1**

(12) **EUROPEAN PATENT APPLICATION**

(43) Date of publication:
**31.10.2012 Bulletin 2012/44**

(51) Int Cl.:
*G02F 1/025* (2006.01)    *H01L 31/0224* (2006.01)

(21) Application number: **11003562.3**

(22) Date of filing: **02.05.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.04.2011 EP 11003540**

(71) Applicant: **Karlsruher Institut für Technologie 76131 Karlsruhe (DE)**

(72) Inventors:
• **Alloatti, Luca
71229 Leonberg (DE)**

• **Leuthold, Juerg, Prof.Dr.
75045 Walzbachtal (DE)**
• **Freude, Wolfgang, Prof.Dr.
76199 Karlsruhe (DE)**
• **Koos, Christian, Prof. Dr.
74936 Siegelsbach (DE)**
• **Korn, Dietmar
76185 Karlsruhe (DE)**

(74) Representative: **Müller-Boré & Partner
Patentanwälte
Grafinger Straße 2
81671 München (DE)**

(54) **Electro-optical device and method for processing an optical signal**

(57)    An electro-optical device for processing an optical signal, comprises an electrode (4; 10; 56, 57; 76, 77) that is arranged and designed so that the optical signal at least partially intrudes the electrode (4; 10; 56, 57; 76, 77) when the optical signal is processed in the electro-optical device (8; 100; 200). An insulator (3; 11; 53; 73) is arranged adjacent to the electrode (4; 10; 56, 77) so that one face (4'; 10B; 56', 57'; 76', 77') of the electrode (4; 10; 56, 57; 76, 77) contacts the insulator (3; 11; 53; 73). A gate (2, 5; 12; 51, 52; 71, 72) is arranged so that a voltage is applicable between the electrode (4; 10; 56, 57; 76, 77) and the gate (2, 5; 12; 51, 52; 71, 72) such that a charge layer (6, 7; 10A) is induced on the face (4'; 10B; 56', 57'; 76', 77') of the electrode (4; 10; 56, 57; 76, 77) that is contacting the insulator (3; 11; 53; 73).

Fig. 1A

## Description

The invention relates to an electro-optical device for processing an optical signal and to a method for processing an optical signal in an electro-optical device.

The invention is applicable in the field of communications, sensing and detection and in particular in the field of Integrated Optics such as devices fabricated in the silicon photonic platform. Examples of devices are high speed electro-optic modulators, photodetectors, sensors, directly modulated laser diodes or any device having a simultaneous electrical and optical functionality.

Electro-optic devices require an electrical connection between an optical waveguide and an electrical source.

In US 2010/0021124 it has been suggested to connect the electrical and optical elements by semiconductor electrodes made conductive by ion implants. Higher ion concentration leads to higher conductivity, but unfortunately also to higher optical losses. These are inherent physical properties that go together. Higher conductivities are however desirable, but the ion implant would introduce unacceptable optical losses because of the free-carrier absorption (FCA). Alternatively, highly conductive electrical connections such as metals could be used. However, they too lead to optical losses because of FCA.

This leads to a trade-off problem on how to find a balance between the electrical conductivity and the optical transparency.

It is an object of the invention to provide an electro-optical device comprising an alternative and improved electrode.

The achievement of this object in accordance with the invention is set out in the independent claims. Further developments of the invention are the subject matter of the dependent claims.

In an aspect of the invention, an electro-optical device for processing an optical signal comprises an electrode that is arranged and designed so that the optical signal at least partially intrudes the electrode when the optical signal is processed in the electro-optical device. The electro-optical device further comprises an insulator that is arranged adjacent to the electrode so that one face of the electrode contacts the insulator. A gate is arranged so that a voltage is applicable between the electrode and the gate such that a charge layer is induced on the face of the electrode that is contacting the insulator.

The electrode is further referred to as semiconductor electrode, since it can either consist of a semiconductor or of a material comprising comparable properties as e.g. special polymers, in particular a polymer the conductivity of which may be changed (preferably increased) by applying an electrical voltage thereto. In such a case the electrode may be referred to as a polymer electrode.

The electrical signal can carry information by which the optical signal is modulated, e.g. a radio frequency (RF) signal. Through the need to produce small components, the part of the electro-optical device that is designed to carry the optical signal, the optical active component (e.g. a waveguide), might be smaller than the wavelength of the optical signal itself. This means that parts of the optical signal are propagating outside of the optical active region as structure which is (at least partially) immersed in light. To reduce losses of the optical signal, the components of the electro-optical device adjacent or close to the optical carrier should be optically transparent at the wavelength/s of the optical signal. Those components can consist of transparent semiconductor electrodes whose electrical conductivity can be increased by inducing or accumulating electrical carriers in it by the gate voltage. The charge layer produced on the face of the semiconductor electrode that is contacting the insulator provides electrical carriers and therefore increases the conductivity of the semiconductor electrode.

Compared to known semiconductor electrodes made of highly doped semiconductors, semiconductor electrodes with an induced charge layer comprise lower optical losses at the same conductivity. Since the conductivity depends on the mobility of the carriers, and the mobility of induced carriers is higher than that of doped carriers, the electrical conductivity is improved.

An optical signal intruding at least partially into the semiconductor electrode means that the semiconductor electrode is designed such that some of the incident optical signal, preferably most of the incident optical signal enters the semiconductor electrode. This can for example mean that the optical signal propagates through it (for an optically transparent semiconductor electrode) or enters it and is absorbed by the semiconductor electrode.

Processing an optical signal can for example mean that the optical signal is guided (in), coupled into, or coupled out of, and/or propagating in the electro-optical device. Additionally or alternatively processing may include modulating phase and/or amplitude and/or polarisation etc. of the optical signal.

In an embodiment of the invention, the insulator is arranged at least partially between the gate and the semiconductor electrode. This provides a good possibility to produce a voltage between the gate and the semiconductor electrode so that a charge layer is induced in the face of the semiconductor electrode contacting the insulator.

This can for example be achieved by arranging the gate, the insulator, and the semiconductor electrode on top of each other, as in the structure of a capacitor. The insulator is arranged as a layer between the gate and the semiconductor electrode, while the gate and the semiconductor electrode are arranged on opposite sides of the insulator. A typical insulator can for example be made of silicon oxide. In particular an insulator stays electrically insulating when the above mentioned voltage is applied between the gate and the electrode.

In an embodiment of the invention, the semiconductor electrode connects an electrical component of the electro-optical device to an optical component of the electro-optical device. The semiconductor electrode is especially useful as interface between optical and electrical components as they are both part of an electro-optical device since the semiconductor electrode comprises both a conductivity (originating from the induced charge layer) and optical properties in the form that the optical signal can intrude into the semiconductor electrode. In other words, the electrode according to the present invention causes less optical losses as compared to a doped semiconductor electrode for the same level of conductivity. Moreover, the electrode according to the present invention, when a voltage is applied, causes less electrical losses, e.g. of an RF signal that is transported by the electrode, as compared to a conventional electrode for the same level of optical absorption.

One example of such an optical property of the semiconductor electrode may be that the semiconductor electrode is optically transparent at the wavelength/s of the optical signal coupled in and/or out of the electro-optical device. This reduces optical losses of the optical signal for those parts of the optical signal that intrude the semiconductor electrode, since they are neither reflected nor absorbed but transported by the semiconductor electrode.

Additionally or alternatively, the gate can be optically transparent at the wavelength/s of the optical signal processed in the electro-optical device, in particular made of doped polysilicon driven to depletion or close to depletion. Then the gate can be arranged close to the semiconductor electrode which improves the applicability of the voltage between the semiconductor electrode and the gate. Further, optical losses of optical signals propagating close to or partly/completely inside the gate are reduced.

Optically transparent means that less than 90%, preferably 68%, preferably 30%, preferably 21% or 20%, more preferably 11% or 10%, more preferably 1%, more preferably 0.1 % of the photons passing through and/or propagating in the material of the device are absorbed. Wherein the material can be one or more of the electrode, gate, cladding material, waveguide, optical active structure, the insulator etc. for the sizes used in the electro-optical device. In other words, in the device less than 90%, preferably less than 68%, preferably less than 30%, preferably less than 21% or 20%, more preferably less than 11% or 10%, more preferably less than 1%, more preferably less than 0.1% of the photons passing through and/or propagating in the device, in particular in the device as a whole are absorbed. Additionally or as an alternative, the term optically transparent covers that less than 90%, preferably less than 68%, preferably less than 30%, preferably less than 21% or 20%, more preferably less than 11 % or 10%, more preferably less than 1%, more preferably less than 0.1% of the photons passing through and/or propagating in one or more of

- the electrode or both electrodes,
- the gate or both gates,
- the cladding material,
- waveguide or both waveguides,
- optical active structure or structures,
- the insulator or insulators etc.

are absorbed.

In particular, it is an advantage of the present invention that - compared to a conventional (semiconductor) electrode, as described above, which has a given electrical conductivity and optical transparency, the (semiconductor) electrode according to the present invention, once the voltage is applied by the gate, can have a similar or even identical electrical conductivity with an increased transmission of light - as compared to the conventional electrode - of more than 1%, preferably more than 10% or 11 %, more preferably more than 20% or 21 %, more preferably more than 68%, more preferably more than 90%. In other words, according to the present invention, a (semiconductor) electrode can be provided with an optical transparency which is more than 1%, preferably more than 10% or 11%, more preferably more than 20% or 21 %, more preferably more than 68%, more preferably more than 90% better than the optical transparency of a conventional (semiconductor) electrode. The conventional (semiconductor) electrode and the (semiconductor) electrode according to the present invention - in use, i.e. when the voltage is applied by the gate - can have similar or even identical electrical conductivity.

Accordingly, it is an advantage of the present invention that after applying the voltage to the (semiconductor) electrode by the gate, i.e. after this increase of the electrical conductivity of the (semiconductor) electrode, at substantially the initial optical transparency, the device can fulfil its intended function or provides at least an increase in performance.

Accordingly, it may even be possible, that - by applying and using a (semiconductor) electrode according to the present invention, the optical transparency of the entire device according to the present invention may be increased - as compared to the conventional device using a conventional electrode - by more than 1%, preferably more than 10% or 11 %, more preferably more than 20% or 21%, more preferably more than 68%, more preferably more than 90%, while both devices can have similar or even identical electrical conductivity.

In an embodiment of the invention, the semiconductor electrode consists mainly of silicon and/or germanium. These materials provide well known semiconductors which can be built and assembled as small components.

The semiconductor electrode can be intrinsic and/or lowly doped. The main part of the electrical conductivity of the semiconductor electrode is caused by the voltage on the gate. Lowly doped means that only the electrical conductivity from the doping alone is not sufficient, efficient or good enough for the semiconductor electrode to provide its function. For the semiconductor electrode to be an efficient or improved conductor, the induced charge layer is needed.

In an embodiment of the invention, the electro-optical device is a silicon-organic hybrid optical modulator, a silicon-inorganic optical modulator and/or detector. The (semiconductor) electrode(s) according to the present invention is/are electrically connected to metal electrodes arranged and designed to carry a RF signal. The one or more (semiconductor) electrodes can be connected directly or through other electrically conductive components, such as doped semiconductors. An RF signal carried by the metal electrodes is conducted to the semiconductor electrodes. Thus, an electrical field is produced which controls the optical properties of an electro-optic waveguide carrying an optical signal. Thus, depending on the RF signal and the organic cladding material which fills the area penetrated by light and not occupied by the objects mentioned, the electro-optic waveguide provides a modulation function. The cladding material can have an optical non-linearity of second order and produce a phase change duo to the Pockels effect. Other materials/compounds which include inorganic substances might change their refractive index and/or absorption coefficient when a voltage is applied and can be used for modulation of light with this structure as well. Thus, an electro-optical modulator can be provided. If the cladding material is appropriately chosen, incident light changes its electrical properties which can be mediated by the semiconductor electrode/s with gate/s. Hence a detector based on optical rectification can be built using this kind of electrode.

As cladding materials can be used for example DH80 as optically nonlinear polymer, DAST (4'-dimethylamino-N-methyl-4-stilbazolium tosylate) as organic material, OH1 (2-(3-(4-hydroxystyryl)-5,5-dimethylcyclohex-2-enylidene)malononitrile) as organic material, or BNA as they are produced by GigOptics and Rainbow Photonics. Conventionally know processing may be necessary, in order to achieve the necessary effects. In an embodiment, the electrode can be made of one or more of these materials.

In another embodiment of the invention, the electro-optical device is a pn- or pin-junction modulator and/or detector and the (semiconductor) electrode according to the present invention is electrically connected to metal electrodes arranged and designed to carry an RF signal. The semiconductor electrode is arranged so that an RF signal applied to the metal electrodes controls the optical properties of the pn- (or pin-) junction confining the optical signal by applying an electric field on the pn-junction by means of the semiconductor electrodes.

In another embodiment of the invention, the electro-optical device is a photodetector, in particular a silicon-germanium photodetector or germanium photodetector, and the semiconductor electrode is detecting photons by absorption. The gate can be arranged as an optically transparent layer so that the intensity of light to be detected by the semiconductor electrode is not reduced.

In another embodiment of the invention, the electro-optical device is a photodetector, in particular a silicon-germanium photodetector, and the semiconductor electrode/s is/are directly connected to the active material (e.g. Germanium) detecting photons by absorption, i.e. generation of electron hole pairs. The gate can be arranged as an optically transparent layer so that the intensity of light to be detected by the semiconductor electrode is not reduced. The gate voltage allows for faster and/or more efficient extraction of charges from the active material.

The object of the invention is also achieved by a method for processing an optical signal in an electro-optical device, comprising the steps:

- processing the optical signal in the electro-optical device so that the optical signal at least partially intrudes a semiconductor electrode,
- applying a voltage between the semiconductor electrode and a gate of the electro-optical device such that a charge layer is induced on a face of the semiconductor electrode that is contacting an insulator arranged adjacent to the semiconductor electrode so that one face of the semiconductor electrode contacts the insulator, and
- increasing the electrical conductivity of the semiconductor electrode by applying the voltage between the semiconductor electrode and the gate.

In the following, the subject-matter will be described by way of example without limitation of the general inventive concept, with the aid of embodiments with reference to the drawings to which attention is drawn concerning the disclosure of all details of the invention not described more explicitly in the text. Some features shown in the different embodiments can be used in the implementations shown in other embodiments. Same reference signs used in the figures show similar features in the embodiments, as shown by

Fig. 1A    is a diagram of a cross-section of a semiconductor electrode in that electrons are induced as charge layer,

Fig. 1B    is a diagram of a cross-section of a semiconductor electrode in that holes are induced as charge layer,

Fig. 1C    is a diagram of a photodetector with two gates,

Fig. 2    is a diagram of a SOH optical modulator/detector with a gate,

Fig. 3    is a diagram of a pn-junction modulator with a gate, and

Fig. 4     is a SOH modulator with gate,

Fig. 5     is an alternative SOH modulator wherein a gate is placed at an alternative position,

Fig. 6     is a setup of a data-transmission experiment, and

Fig. 7     are experimental results.

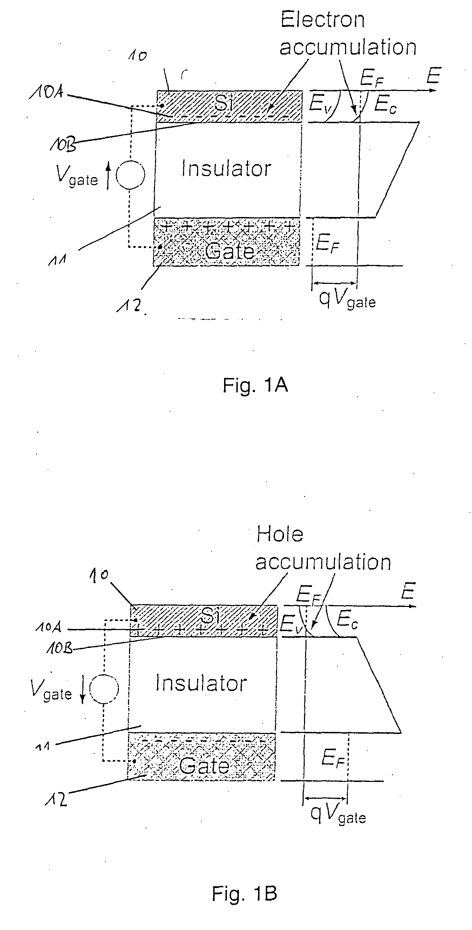

**Fig. 1A** shows a cross-section of a semiconductor electrode 10 that is a component for a not shown electro-optical device. The semiconductor electrode 10 consists of a silicon layer which is intrinsic or lowly doped. An insulating layer forms an insulator 11 that separates the semiconductor electrode 10 from a gate 12.

The gate 12 and the semiconductor electrode 10 are arranged on opposite sides of the insulator 11 and form a capacitor. One side of the semiconductor electrode 10, a face 10B, is contacting the insulator 11. The face 10B is designed plain and arranged on the side 10B of the semiconductor electrode 10 that is facing the gate 12.

When a voltage $V_{gate}$ is applied between the semiconductor electrode 10 and the gate 12, energy bands in the semiconductor electrode 10 are bent and a charge layer 10A is formed in the face 10B at the boundary of the semiconductor electrode 10 and the insulator 11. This is a well know mechanism, and is explained for example in Physics of Semiconductor Devices, Third Edition 2006 by S.M. Sze and K.NG. Kwok.

The charge layer 10A decreases the overall sheet resistance of the silicon film of the semiconductor electrode 10. This method can be applied in optical devices where optical losses are critical. The conductivity is due to injected carriers rather than due doping. Injected carriers in intrinsic semiconductors have a higher mobility than carriers in doped semiconductors. The conductivity is related to the carrier density and the mobility by

$$\sigma = q \, N \, \mu.$$

Here $\sigma$ is the conductivity, q is the electrical charge, N is the density, and $\mu$ is the mobility. As a consequence, the electrical conductivity in a semiconductor will be higher if carriers stem from carrier injection rather than from doping. On the other hand, the Drude-Lorenz model states that optical losses induced by free carriers having a density N and a mobility $\mu$ are given by

$$\alpha_{Drude} \propto N/\mu.$$

Thus, a semiconductor electrode 10 with induced carries provides lower optical losses for a given carrier density N. The conclusion based on the Drude-Lorenz model must be considered as an indication. It is known that the Drude-Lorenz model does not fully describe the absorption in silicon. Yet no experimental data is available so far on the optical losses induced by injected carriers in intrinsic silicon.

**Fig. 1A** shows the creation of an electron layer as charge layer 10A in the silicon of the semiconductor electrode 10 when a gate voltage $V_{gate}$ is applied across the insulator 11.

**Fig. 1B** shows in a similar assembly the creation of a hole layer as charge layer 10A.

In both examples, the gate voltage $V_{gate}$ bends the energy bands in the silicon of the semiconductor electrode 10. $E_{F,C,V}$ are the Fermi energy, conduction and valence band energy, respectively. q is the elementary charge.

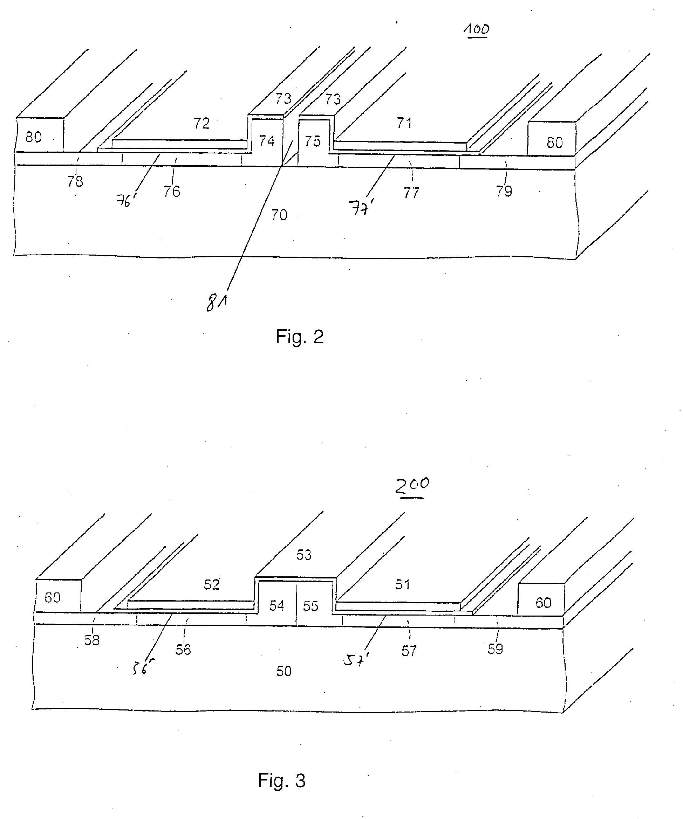

**Fig. 2** shows a diagram of a silicon-organic hybrid (SOH) modulator 100 as electro-optical device. The working principle of a SOH modulator is described in US 2010/0021124.

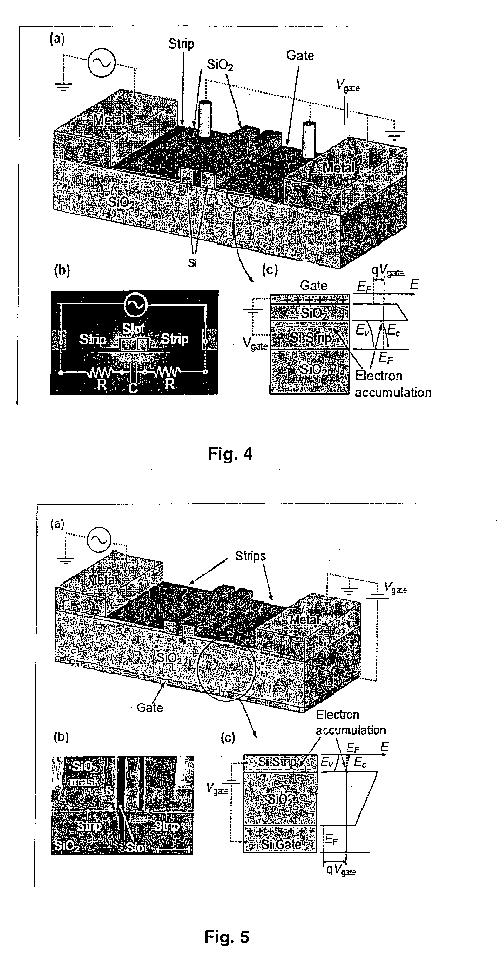

An optical waveguide consists of silicon arms 74 and 75 together with a slot 81 in between. The silicon arms 74 and 75 are arranged spaced to each other to form the slot 81. The structure is covered with a highly-nonlinear electro-optic material which is not shown in **Fig. 2.** The highly-nonlinear electro-optical material fills in particular the slot 81. Optical signals carrying information are guided mostly within the silicon arms 74, 75 , and the slot 81. The dimensions of the waveguide are smaller than the wavelength of the optical signal, which results in the phenomena that not the complete optical signal is confined in the waveguide structure (see also **Fig. 4(b))**. A typical optical signal has a wavelength of 1550 nm, while the waveguide may have 1/2 or 1/3 of this size in its cross-section. Alternative optical signals may be in the O, E, S, C, L, or U-band. This results in the need that the components close to the optical waveguide 74, 75, 81 should be optically transparent at the wavelength of the optical signal to minimise optical losses of the signal.

The silicon arms 74 and 75 are arranged on top of a silica substrate 70. The substrate 70 also carries two semiconductor electrodes 76 and 77 which are placed adjacent to the silicon arms 74 and 75. On the opposite side of the semiconductor electrodes 76 and 77, highly doped silicon regions 78 and 79 are arranged outside the optical field on top of the substrate 70. They connect the semiconductor electrodes 76 and 77 to metal electrodes 80 arranged on top of the silicon regions 78 and 79. To the metal electrodes 80 a radio frequency (RF) signal can be applied to modulate the SOH modulator. The RF signal is conducted by the silicon regions 78 and 79 to the semiconductor electrodes 76 and 77 which apply, depending on the RF signal, an electrical field on the waveguide 74, 75, 81 changing the optical properties of the material in the slot 81.

On top of the silicon electrodes 76 and 77, which are intrinsic or lowly doped, a thin $SiO_2$ film is grown or deposited as insulator 73 as done in standard CMOS fabrication processing. The insulator 73 is formed by an oxide. The low doping depends on the dimensions of the SOH modulator components. E.g., while a high doping comprising a good electrical conductivity could be achieved in the order of magnitude of $10^{18}$ ions cm$^{-3}$, a lowly doping is achieved in the order of magnitude of $10^{16}$ ions cm$^{-3}$ to $10^{17}$ ions cm$^{-3}$ which offers only an insufficient electrical conductivity for this application that has to be improved by a gate voltage.

On top of the insulator 73, polysilicon is deposited as a gate 71 and 72. The gate material is optically transparent at the wavelength of the optical signal. This can e.g. be achieved by using a layer of doped polysilicon driven to depletion. The ion concentration is adjusted such that when the desired gate voltage is applied between the gates 71, 72 and the semiconductor electrodes 76, 77, all the free carriers in the polysilicon have been removed. In this way the net charge of the gates 71, 72 is caused by fixed nuclei which cannot cause free-carrier absorption (FCA). In the case where electrons are injected in the semiconductor electrodes 76, 77 the gates 71, 72 must be n-doped. Also holes can be injected in the semiconductor electrodes 76, 77 in which case the gates 71, 72 are p-doped.

Both the semiconductor electrodes 76, 77 and the gates 71, 72 are arranged inside of the optical field of the optical signal to be transported by the waveguide 74, 75, 81. Therefore parts of the optical signal will intrude into the gates 71, 72 and the semiconductor electrodes 76, 77. Thus, both the gates 71, 72 and the semiconductor electrodes 76, 77 are optically transparent at the wavelengths of the optical signal to reduce an optical loss.

The insulator 73 separates the semiconductor electrodes 76, 77 from the gates 71, 72 so that a gate voltage $V_{gate}$ can be applied between them that induces the charge layer in a face 76', 77' of the semiconductor electrodes 76, 77 facing the insulator 73. Thus, the conductivity of the semiconductor electrodes 76, 77 is increased. This also provides the possibility to modulate the gate voltage $V_{gate}$ with a signal to change the optical properties of the semiconductor electrodes and therefore the optical properties of the waveguide 74, 75, 81.

Those skilled in the art may find many variations to the scheme depicted in **Fig. 2.** For instance, the layers 78, 79 might not be needed or be replaced with a metal layers. The insulator 73 might have a different shape and many other modifications would work as well.

Similar schemes could be applied to almost any electro-optical modulator. For instance, a similar scheme could be used for inducing the electro-optic effect in strained silicon, in InP or GaAs based electro-optic modulators and in many alternative electro-optic material systems.

For a given optical loss, higher semiconductor conductivity can be obtained as compared to an ion implant. This leads to devices having a higher bandwidth. Vice-versa, for a given conductivity, lower optical losses can be obtained.

The silicon electrodes can be made notably thinner than what suggested so far for silicon-organic hybrid (SOH) modulators. Thinner silicon electrodes imply that the overlap between optical field and free charges can be reduced, leading to additional lower optical losses.

The SOH modulator 100 shown in **Fig. 2** can also be used as a SOH detector taking advantage of the optical rectification occurring in the electro-optic material. The gates 71, 72 are used to decrease the resistance of the silicon arms 74, 75 and consequently to increase the bandwidth of the detector 100.

**Fig. 3** shows a reverse biased pn-junction modulator 200 as an electro-optical device. These modulators are limited by the RC-time constant where the resistance R is determined by semiconductor electrodes 56 and 57 made of silicon and the capacity C of a pn-junction 54 and 55 where an optical signal is confined.

On top of a silica substrate 50 an optical active region consists of the pn-junction 54 and 55. Semiconductor electrodes 56 and 57 connect to the p-side 54 and n-side 55 of the pn-junction 54, 55 and are arranged on top of the substrate 50. The semiconductor electrodes 56, 57 require holes or electrons to be injected, respectively by applying a negative voltage on a gate 52 arranged over the semiconductor electrode 56 connected to the p-side 54 and a positive voltage on a gate 51 arranged over the semiconductor electrode 57 connected to the n-side 55. These voltages increase the electrical conductivity of the semiconductor electrodes 56, 57 so that the RF signal can be used to control the pn-junction 54,55.

The charge layers are induced in faces 56', 57' of the semiconductor electrodes 65, 57 bordering on the insulator 53 in the side of the semiconductor electrodes 56, 57 that faces the gates 51, 52.

A gate oxide 53 forms an insulator in form of a layer between the semiconductor electrodes 56, 57 and the gates 51, 52. An RF signal is applied on metal electrodes 60 connected to the semiconductor electrodes 56, 57 via silicon regions 58 and 59.

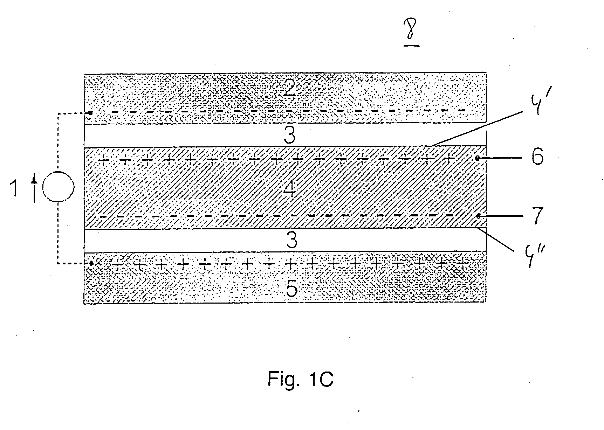

**Fig. 1C** shows a diagram of a Silicon-Germanium photodetector 8. It can be a vertical or lateral silicon-germanium photodetector, wherein a charge layer induced by a gate voltage can be induced in silicon as well as in germanium. The Silicon-Germanium photodetector 8 can be adapted for normal incidence or waveguide integration.

An optical active layer of the photodetector is formed by an intrinsic germanium layer as semiconductor electrode 4. On the top and bottom of the semiconductor electrode 4, two gates 2 and 5 are located separated from the semiconductor electrode 4 by an insulator layer 3.

By applying a gate voltage 1 between the two gates 2 and 5, a highly conductive hole/electron layer is formed at the top/bottom of the germanium film of the semiconductor electrode 4 in faces 4' and 4". The thickness of the semiconductor electrode 4 is in the order of magnitude of the thickness of the hole and electron layers, e.g. 20 nm.

If an electron-hole pair is created in the semiconductor electrode 4 by the absorption of a photon of an optical signal, the electron and hole are separated because of the band bending in the semiconductor electrode 4 caused by the gate voltage 1. The hole and electron are extracted in position 6 and 7 respectively where for example two vias are located.

The highly conductive electron and hole layers have the function of transporting the charge from a location where the electron-hole pair is generated to the positions 6 and 7. The gates 2, 5 can be made transparent by using depleted n- or p-type polysilicon as described before. The transit frequency and therefore the bandwidth of the photodetector 8 are determined by the thickness of the germanium layer 4.

An advantage compared to normal pn-photodetectors is that no p- or n-regions are required although p- or n-regions may be present. In an embodiment, no p-regions and no n-regions are required/present. For a high quantum efficiency no free-carrier absorption (FCA) should occur, therefore these regions should lie outside the optical region requiring larger thickness of the intrinsic region and therefore longer transit times for the same FCA-induced optical loss. This holds especially for germanium photodetectors.

CMOS-compatible optical modulators as electro optical devices are key components for future silicon-based photonic transceivers. However, achieving low modulation voltage and high speed operation still remains a challenge. As a possible solution, the silicon-organic hybrid (SOH) platform has been proposed. In the SOH approach the optical signal is guided by a silicon waveguide while the electro-optic effect is provided by an organic cladding with a high nonlinearity. In these modulators the optical nonlinear region needs to be connected to the modulating electrical source. This requires electrodes, which are both optically transparent and electrically highly conductive. To this end we introduce a highly conductive electron accumulation layer which is induced by an external DC "gate" voltage. As opposed to doping, the electron mobility is not impaired by impurity scattering. This way data encoding with an SOH electro-optic modulator is demonstrated for the first time. Using a first-generation device at a data-rate of 42.7 Gbit/s, widely open eye diagrams were recorded. The measured frequency response suggests that significantly larger data rates are feasible.

One of the most important properties of an optical modulator is its modulation speed or bandwidth, which should be at least as fast as the available electronics. Transistors having transit frequencies well above 100 GHz have already been demonstrated in 90 nm silicon technology, and the speed will further increase as the minimum feature size is reduced. However, the bandwidth of present-day silicon-based modulators is limited. Silicon does not possess any x-nonlinearity due to its centro-symmetric crystalline structure. The use of strained silicon has led to interesting results already, but the nonlinearities do not yet allow for practical devices. State-of-the art silicon photonic modulators therefore still rely on free-carrier dispersion in pn- or pin-junctions. Forward biased junctions have been shown to exhibit a voltage-length product as low as $V_\pi L = 0.36$ Vmm, but the modulation speed is limited by the dynamics of minority carriers. Still, data rates of 10 Gbit/s have been generated with the help of a pre-emphasis of the electrical signal. Using reverse biased junctions instead, the bandwidth has been increased to around 30 GHz, but the voltage-length product rose to $V_\pi L = 40$ Vmm. Unfortunately, such plasma effect phase modulators produce undesired intensity modulation as well, and they respond nonlinearly to the applied voltage. Advanced modulation formats like QAM require, however, a linear response and pure phase modulation, making the exploitation of the electro-optic effect (e.g. Pockels effect) particularly desirable.

Recently, a silicon-organic hybrid (SOH) approach has been suggested. An example of an SOH modulator is shown in **Fig. 4(a).** It consists of a slot waveguide guiding the optical field, and two silicon strips which electrically connect the optical waveguide to the metallic electrodes, similar to the SOH modular shown in **Fig. 2.** The metallic electrodes are located outside the optical modal field to avoid optical losses, as shown in Fig. 4(a),(b). The electro-optic device is coated with an electro-optic organic material which uniformly fills the slot. The modulating voltage is carried by the metallic electrical waveguide and drops off across the slot thanks to the conductive silicon strips. The resulting electric field then changes the index of refraction in the slot through the ultra-fast electro-optic effect. Since the slot has a width in the order of 100 nm, few volts are enough to generate very strong modulating fields, i.e. in the order of the dielectric strength of most materials. The structure has a high modulation efficiency since both the modulating and the optical field are concentrated inside the slot, see **Fig. 4(a)**.

First implementations of SOH modulators with sub-volt operation have been already shown, and sinusoidal modulation up to 40 GHz was demonstrated. However, the challenge in building low-voltage high-speed SOH modulators is to create a highly conductive connecting strip. In an equivalent circuit the slot can be represented by a capacitor C and the conductive strips by resistors R, as shown in **Fig. 4(b)**. The corresponding RC time constant determines the bandwidth of the device. In order to decrease the resistance R, it has been suggested to dope the silicon strips (which form semiconductor electrodes). While doping increases the conductivity of the silicon strips (and therefore increases optical losses), one pays an additional loss penalty because the electron mobility is impaired by impurity scattering. Moreover, the most recent fabrication attempts showed unexpectedly low conductivity.

**Fig. 4** shows a SOH-modulator. **Fig 4 (a)** shows the optical active region is connected to the metal electrodes by means of thin silicon strips. On top of the silicon strips an $SiO_2$ film is deposited and covered with the gate electrode. **Fig. 4(b)** shows across-section of the waveguide and electric field distribution of the optical mode; the light is concentrated in the slot. Lower inset: Equivalent RC circuit for the transfer of the voltage between metallic electrodes to the voltage dropping across the slot (slot capacitance C, strip resistance R). **Fig. 4(c)** shows a positive gate voltage applied across the gate oxide, a highly conductive electron accumulation layer is formed in the silicon strips. Under the effect of the gate voltage $V_{gate}$ the energy bands in the strip are bent. $E_{F,C,V}$ are Fermi energy, conduction and valence band energy, respectively; q is the elementary charge.

An SOH-based slot-waveguide phase modulator is used as electro-optical deivce, where the conductivity of the silicon strips connecting the slot region to the modulation electrodes is increased with a novel method which does not create significant optical loss. This enables the first experimental demonstration of data encoding with an SOH modulator. Even though the demonstrator is the very first specimen, which has not yet been optimised, the performance can already compete with that of state-of-the-art plasma-effect modulators. The data rate of 42.7 Gbit/s that we achieved was limited by the available equipment. The modulator performance suggests, however, that significantly higher data rates are possible.

The structure of the modulator is shown in **Fig 4(a)**. The slot region in the centre, where both the optical and the modulating microwave fields interact, is connected to the metal electrodes by thin silicon strips. On top of these strips a slightly conductive layer (gate) is deposited, isolated from the strips by a thin silicon oxide film as insulator. The structure obtained in this way is similar to the well-known metal-insulator-semiconductor (MIS). When a positive voltage $V_{gate}$ is applied across the oxide (see **Fig 4 (a)**), the energy bands in the strips are bent (**Fig. 4(c)**), and a high-mobility electron accumulation layer is formed at the $Si/SiO_2$ interface. Since the strip conductivity is proportional to the mobility and the free-electron density, the limiting frequency $f_{RC} = 1/(2\pi RC)$ increases with increasing gate voltage. For convenience the structure is referred to below as an accumulation-layer electro-optic modulator (ALMod).

The gate of the device depicted in **Fig.4(a)** must be optically transparent. This can in principle be achieved by using a thin layer (less than 10 nm) of n-doped polysilicon driven to depletion. The ion concentration is adjusted such that when the desired gate voltage is applied all the free carriers in the polysilicon have been removed. In this way the net positive charge of the gate is mainly caused by fixed nuclei which cannot cause free-carrier absorption.

In order to validate the ALMod concept as electro-optical device, the technologically is fabricated in simpler structure as depicted in **Fig 5**. Here, the gate voltage is applied between the metal electrodes and the silicon substrate. Since the silicon substrate has a conductivity $\sigma = 0.05 \ \Omega^{-1} \ cm^{-1}$, the gate voltage drops essentially across the 2 $\mu$m silicon oxide which separates the optical layer from the silicon substrate, **Fig 5(a)**. To avoid any damage to the chip, a gate voltages larger than 270 V was not applied. This corresponds to an electric field $E_{gate} = 0.135$ V/nm in the 2 $\mu$m thick $SiO_2$, which is much smaller than the breakdown voltage of 1 V/nm achievable in state-of-the art thin $SiO_2$ films. The length of the modulator is 1.7 mm, and the ground-signal (GS) electrical waveguide has a nominal impedance of 50 $\Omega$. The device was fabricated in a CMOS fab using deep-UV lithography, and an organic cladding with a nominal nonlinear coefficient of $r_{33} = 70$ pmN was subsequently deposited and poled *in situ* as explained below.

**Fig. 5** shows an SOH modulator used in this work. **Fig 5(a)** shows a slightly conductive silicon substrate is used as a gate. **Fig. 5(b)** shows a SEM picture of the cross section of the fabricated device. The $SiO_2$ mask was used as a protection layer during fabrication and lies on top of the strips. In the centre the silicon optical waveguide is visible. The slot extends for about 1 $\mu$m into the $SiO_2$ substrate for fabrication issues. **Fig. 5(c)** shows a positive gate voltage applied across the 2 $\mu$m thick SiO2 substrate and a highly conductive electron accumulation layer formed in the strips. The thickness of the strips is 60 nm; for clarity they are not drawn to scale. The gate voltage $V_{gate}$ bends the energy bands in the strips $E_{F,C,V}$ are Fermi energy, conduction and valence band energy, respectively; q is the elementary charge.

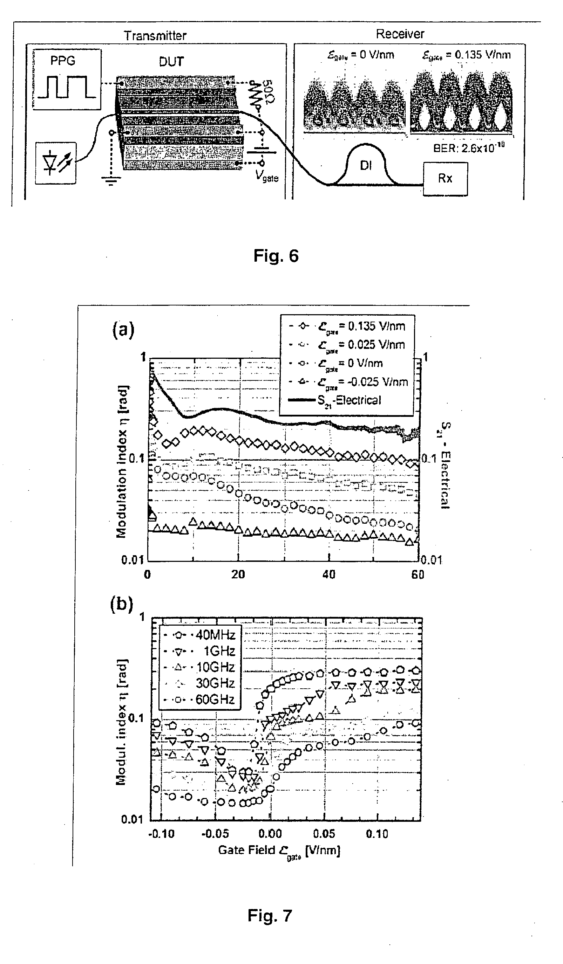

The slot waveguide has a "rail" width and a slot width of 240 nm and 120 nm respectively. The light is coupled by means of grating couplers, whose separation is 2.6 mm. The optical waveguide comprises the 1.7 mm long phase shifters, two tapers and two 67 $\mu$m long strip to slot waveguide converters. The silicon strips used for connecting electrically the slot waveguide have a thickness of 60 nm (about 10 nm have been oxidised during the high temperature annealing). The ground-signal (GS) metal electrodes have a gap of 4 $\mu$m and the nominal line impedance is 50 $\Omega$. The length of the electrodes is 3.0 mm and comprises two tapered regions for contacting having a length of 0.55 mm each. On the output side, the 50 $\Omega$ line is connected to another transmission line which has a length of 3.0 mm and a line impedance of 75 ohm. This line belongs to a second device and is not terminated. It could not be cleaved away since this would cause an electrical breakdown at the chip edge when applying the gate voltage. The presence of the 75 ohm line is responsible for the local maximum in the $S_{21}$ parameter around 10 GHz as shown in **Fig. 7**; this oscillation was not observed in cleaved samples.

To demonstrate the high-speed capabilities of the phase modulator a 42.7 Gbit/s data modulation experiment was performed. A 1550 nm laser was used as an optical source, and a pseudorandom bit sequence (PRBS) with a length of $2^{31}$-1 controlled the modulator. A one-bit delay-interferometer (DI) on the receiver side was used to convert phase modulation to intensity modulation, which was then detected with a photodiode. The DI has the further effect of cutting off the low frequency modulation components. The RF amplitude was set to $V_{pp}$ = 4.1 V (measured before the probe), and the device was terminated with an external broadband 50 Ω resistor. When the gate field was increased from zero to its maximum value, the optical loss increased by less than 1 dB. The gate leakage current was always below 10 nA, corresponding to a gate power consumption of less than 3 μW. Clear and open eye diagrams at 42.7 Gbit/s were found with the highest gate field, as shown in **Fig. 6**. Bit-error-ratios (BER) smaller than $3 \times 10^{-10}$ were recorded, demonstrating the usability of the device in real data links.

**Fig. 6** shows a setup of the data-generation experiment. A pulse pattern generator (PPG) creates a 42.7 Gbit/s electrical signal. Light from a 1550 nm laser is launched into the slot-waveguide. The device is terminated with an external 50 Ω resistor. A gate voltage is applied between the silicon substrate and the silicon strips. The 50 Ω resistance is responsible of keeping both strips at the same electrical DC potential. On the receiver side a delay-interferometer converts the phase modulation into intensity modulation for detection. By increasing the gate voltage to $V_{gate}$ = 270 V (gate field $E_{gate}$ = 0.135 V/nm) clear and open eyes are found.

The frequency response of the device was further determined by applying a sinusoidal voltage with frequencies $f_{mod}$ between 1 kHz and 60 GHz. The chip was contacted like in the data modulation experiment. The RF power at the probe input was kept constant at 10 dBm (1.0 Vp amplitude). The resulting phase modulation index was measured, which represents the achieved phase shift in radians. The data are shown in **Fig. 7(a)** for different gate fields together with the electrical transmission characteristic of the metal electrodes ($S_{21}$ voltage ratio). By increasing the gate field from $E_{gate}$ = -0.025 V/nm to $E_{gate}$ = 0.135 V/nm the modulation index increases by more than a factor of five in the frequency range above 1 GHz. For the highest gate field, a voltage length product of $V_\pi L$ = 9 Vmm (58 Vmm) was measured in the low frequency limit and at 60 GHz respectively. For the 1.7 mm long device this corresponds to a $\pi$-voltage of $V_\pi$ =5.3 V (34 V). Above 2 GHz, the frequency response is essentially flat (less than 3dB decrease between 2 GHz and 60 GHz) suggesting that data rates could be extended well beyond the 42.7 Gbit/s limit of the used equipment.

In order to better investigate the effect of the gate, the modulation index as a function of the gate field was recorded for selected frequencies, as shown in **Fig. 7(b)**. For more positive gate fields an increasing number of electrons accumulate in the silicon strips. The strip resistance decreases accordingly, leading to higher modulation indices. Simulations, performed with the DESSIS package, indicate that the sheet resistance of the silicon strips becomes smaller than 1500 Ω/sq for gate fields $E_{gate}$ > 0.135 V/nm, which could otherwise be achieved only by doping the silicon strips with an ion-concentration as high as $3 \times 10^{18}$ cm$^{-3}$. At the gate field $E_{gate}$ = -0.025 V/nm a minimum in the modulation index is observed. This indicates that the silicon strips have become highly insulating. The MIS model and the simulations indicate indeed that for this gate field the slightly n-doped strips are fully depleted of free electrons. At more negative gate fields the modulation index increases again because of the formation of a conductive hole inversion layer .

**Fig. 7** shows a response of the DUT vs. frequency and gate field for 1 V modulation amplitude. **Fig 7(a)** shows a phase modulation index η vs. frequency for selected electrical gate fields. The measured modulation frequency range is 1 KHz to 60 GHz. When varying the gate field from -0.025 V/nm to 0.135 V/nm the silicon strips become more conductive, and the modulation index increases accordingly. The upper curve is the $S_{21}$ electrical transmission of the metallic electrical waveguide (voltage ratio); the decrease to 0.3 is an undesired effect of the electrical losses of our test device. **Fig. 7(b)** shows a modulation index vs. gate field for selected modulation frequencies. Each curve reaches a plateau at high gate fields. For $E_{gate}$ = -0.025 V/nm the silicon strips become highly insulating, therefore a minimum is observed. At more negative fields the modulation increases again because of the formation of a conductive inversion layer in the silicon strips.

The effects of the gate field on the electron and hole densities in the silicon strips was investigated by solving numerically the equations of the one-dimensional MIS model for different gate voltages. Charge density and resistance of the real structure were simulated by means of the two-dimensional simulation package DESSIS. Both methods predicted three different regimes (accumulation, depletion and inversion) for different gate voltages, in agreement with the experimental observation.

In this first implementation, the poling of the organic cladding is incomplete. By exploiting the full potential of organic electro-optic materials the drive voltage can be decreased by a factor of eight. Moreover the electrical performance of the current metal electrodes is not optimal, see **Fig.7(a)**. This can be improved in future devices by increasing the thickness of the metallization or by using a distributed on-chip RF driver.

The ALMod structure shown by **Fig. 4** offers a number of advantages when compared with structures made conductive by ion implant. First, the silicon strips of **Fig. 4** can be made notably thinner than the 60 nm used in **Fig. 5**. In fact, thin strips are good enough since for gate fields of 0.135 V/nm or higher, more than 90% of the free carriers are already concentrated in the first 10 nm from the Si/SiO$_2$ interface. Also, for thin strips the optical field is concentrated more strongly inside the slot leading to a more efficient modulation. The second advantage is that the strips do not require doping anymore, so that the electron mobility remains unperturbed and high, leading to lower optical losses for a given conductivity (see below). Third, when using thin gate oxides (in the order of 10 nm), gate fields seven times larger than those used in here can be applied, decreasing the strip resistances even more. This will become important once narrower slots are fabricated, since then an additional factor ten in the modulation efficiency can be gained, at the price of a larger slot capacitance.

The modulation increased by a factor of five at 60 GHz while the optical loss increased by less than 1 dB.

Optical absorption caused by injected carriers: The well-known empirical equations of Soref and Bennett relating the optical absorption in silicon to the free carrier density is based on experimental data where the free carriers come from impurity ionisation and not from carrier injection. Soref and Bennet explicitly assumed equivalence between the two cases. Instead, the Drude-Lorenz model predicts that the optical absorption coefficient is proportional to the free charge density N and to the inverse of the mobility $\mu$. In doped samples the mobility is strongly impaired by scattering at impurities, while this is not the case for injected carriers in pure silicon. As an example, the electron mobility drops from roughly 1200 cm$^2$/(Vs) to less than 300 cm$^2$/(Vs) passing from an impurity concentration of $10^{16}$ cm$^{-3}$ to $10^{18}$ cm$^{-3}$. As a consequence, for a given free electron concentration $N_e$, not only the conductivity $\sigma = q\, N_e\, \mu_e$ is lower for doping than for injection, but also the optical loss $\alpha_{Drude} \propto N_e/\mu_e$ is higher. This indicates that injected carriers have an intrinsic advantage over carriers deriving from impurity ionisation when both high conductivities and low optical losses are required.

Waveguide fabrication: The waveguides were fabricated within the ePIXfab framework by CEA-LETI according to standard processes of the microelectronic industry. Two silicon-on-insulator (SOI) wafers were used, with layers of 220 nm thick crystalline silicon and 2 $\mu$m thick silicon oxide. The wafers were first implanted with arsenic for reaching a uniform ion concentration of $10^{17}$/cm$^3$. To this end, a dose of $5\times10^{12}$/cm2, energy of 150keV, tilt 0°, twist 0° was used.

Grating couplers were then created by means of a 248 nm DUV lithography followed by 70 nm silicon etch performed with HBr. A high temperature oxide (HTO) layer of 130 nm used as a hard mask was grown and subsequently structured by means of 193 nm DUV lithography. A 150 nm silicon etch was used to define the waveguides. Taking advantage of the self-alignment with the preexisting hard-mask, a 248 nm lithography defined the regions for a full silicon etch inside the slots. A thermal oxidation at 1100°C for 10 minutes was performed for reducing the surface roughness. A 248 nm DUV lithography defined the high-doping regions for the formation of ohmic contacts beneath the metal electrodes. To this end the wafers were implanted with arsenic using a dose

of $2\times10^{15}$/cm2 and an energy of 30keV. The ions were activated with a 1050°C annealing for 15 minutes. At this point one wafer was not processed further for future optical loss measurements. Waveguides belonging to this wafer and coated with the nonlinear material had an insertion loss of 16 dB (10 dB of which is caused by the grating couplers). A 500 nm thick silica protection layer was deposited on the entire wafer. A 248 nm DUV lithography was followed by a silica etch down to the silicon layer. A Ti/TiN/AlCu metal stack having total thickness of 600 nm was deposited by physical vapor deposition (PVD) on the entire wafer. A 248 nm DUV lithography and a reactive ion etch (RIE) with chlorine was used to structure the metal electrodes. The wafer was then annealed for 30 minutes at 425°C. Finally the slots were opened by means of a silica etch. The waveguides were spin-coated with the nonlinear organic material and poled in situ. The insertion loss of the waveguide is 40 dB. This 24 dB increase is mostly due to an error that occurred in the last silica etch step which considerably increased the surface roughness of the waveguide. Improving this process is currently worked on.

Method used for determining the modulation index: In the frequency range between 40 MHz and 60 GHz the phase modulation index $\eta$ was derived by evaluating the ratio $J_0^2(\eta)/J_1^2(\eta)$ between the central intensity peak and the first sideband intensity of the phase modulated signal ($J_v$ is the Bessel function of the first kind). The spectra were recorded with an optical spectrum analyser (Apex AP2050). In the frequency range between 1 kHz and 40 MHz the phase modulator was inserted in one arm of a fiber-based Mach-Zehnder interferometer. The interference was recorded by means of a wide-band photodetector (Thorlabs PDA10CF) and a 1 GHz oscilloscope. The achieved phase modulation was derived from the amplitude of the intensity modulation.

Poling of the electro-optic material and origin of the phase shift: The nonlinear material was poled by applying 16 V to the metal electrodes while the device was heated from room temperature to 141°C and then rapidly cooled as soon as this temperature was reached. Unpoled samples showed no detectable sideband in the spectrum (modulation smaller than 0.002 rad/V), demonstrating that the measured phase shift is actually due to the cladding nonlinearity and not caused by free carriers. From the modulation index in the low frequency limit an achieved nonlinearity of $r_{33} = 20 \pm 2$ pm/V is estimated. There is large potential for further increasing this value: The same material is used in commercially available polymer modulators where values of $r_{33} = 80$ pm/V are routinely achieved by parallel plate poling. In SOH systems, values as high as $r_{33} = 40$ pm/V have been reported. The highest $r_{33}$ value 11 achieved by in situ poling amounts to 170 pm/V. This would result in a reduction of the operation voltage by a factor of eight.

**List of Reference Numerals**

| | |
|---|---|
| 1 | gate voltage |
| 2, 5 | gate |
| 3 | insulator |
| 4 | semiconductor electrode |
| 4', 4" | face of the semiconductor electrode |
| 6 | hole position |
| 7 | electron position |
| 8 | photodetector |
| 10 | semiconductor electrode |
| 10A | charge layer |
| 10B | face of the semiconductor electrode |
| 11 | insulator |
| 12 | gate |
| 50 | substrate |
| 51,52 | gate |
| 53 | insulator |
| 54,55 | pn-junction |
| 56,57 | semiconductor electrode |
| 56', 57' | face of the semiconductor electrode |
| 58,59 | electrical carrier |
| 60 | metal electrode |
| 70 | substrate |
| 71,72 | gate |
| 73 | insulator |
| 74,75 | waveguide |
| 76,77 | semiconductor electrode |
| 76', 77' | face of the semiconductor electrode |
| 78,79 | doted semiconductor |
| 80 | metal electrode |
| 81 | slot |
| 100 | SOH modulator/detector |
| 200 | pn-junction modulator |
| $V_{gate}$ | voltage between gate and semiconductor electrode |

**Claims**

1. Electro-optical device for processing an optical signal, comprising

   - an electrode (4; 10; 56, 57; 76, 77) arranged and designed so that the optical signal at least partially intrudes the electrode (4; 10; 56, 57; 76, 77) when the optical signal is processed in the electro-optical device (8; 100; 200),
   **characterised by**
   - an insulator (3; 11; 53; 73) arranged adjacent to the electrode (4; 10; 56, 57; 76, 77) so that one face (4'; 10B; 56', 57'; 76', 77') of the electrode (4; 10; 56, 57; 76, 77) contacts the insulator (3; 11; 53; 73) and
   - a gate (2; 5; 12; 51, 52; 71, 72) arranged so that a voltage is applicable between the electrode (4; 10; 56, 57; 76, 77) and the gate (2, 5; 12; 51, 52; 71, 72) such that a charge layer (6, 7; 10A) is induced at the face (4'; 10B; 56', 57'; 76', 77') of the electrode (4; 10; 56, 57; 76, 77) that is contacting the insulator (3; 11; 53; 73).

2. Electro-optical device according to claim 1, wherein the electrical conductivity of the electrode (4; 10; 56, 57; 76, 77) is controlled by the voltage on the gate (2, 5; 12; 51, 52; 71, 72).

3. Electro-optical device according to claim 1 or 2, wherein the insulator (3; 11; 53; 73) is arranged at least partially between the gate (2, 5; 12; 51, 52; 71, 72) and the electrode (4; 10; 56, 57; 76, 77).

4. Electro-optical device according to any of claims 1 to 3, wherein the gate (2, 5; 12; 51, 52; 71, 72), the insulator (3; 11; 53; 73), and the electrode (4; 10; 56, 57; 76, 77) are arranged on top of each other and form a capacitor.

5. Electro-optical device according to any of claims 1 to 4, wherein the electrode (4; 10; 56, 57; 76, 77) connects an electrical component (60; 80) of the electro-optical device (8; 100; 200) to an optical component (54, 55; 74, 75, 81) of the electro-optical device (8; 100; 200).

6. Electro-optical device according to any of claims 1 to 5, wherein the electrode (10; 56, 57; 76, 77) is optically transparent at the wavelength/s of the optical signal processed in the electro-optical device (8; 100; 200).

7. Electro-optical device according to any of claims 1 to 6, wherein the gate (2, 5; 12; 51, 52; 71, 72) is optically transparent at the wavelength/s of the optical signal processed in the electro-optical device (8; 100; 200), in particular made of doped polysilicon driven to depletion.

8. Electro-optical device according to any of claims 1 to 7, wherein the electrode (4; 10; 56, 57; 76, 77) consists mainly of silicon and/or germanium.

9. Electro-optical device according to any of claims 1 to 8, wherein the electrode (4; 10; 56, 57; 76, 77) is intrinsic and/or lowly doped.

10. Electro-optical device according to any of claims 1 to 9, wherein the electro-optical device (8; 100; 200) is a silicon-organic hybrid optical modulator and/or detector (100) and the electrode (76, 77) is electrically connected to metal electrodes (80) arranged and designed to carry an RF signal.

11. Electro-optical device according to claim 10, wherein the electrode (76, 77) is arranged so that an RF signal applied to the metal electrodes (80) controls the optical properties of an electro-optic waveguide (74, 75, 81) carrying an optical signal by applying an electric field on the electro-optic waveguide (74, 75, 81) by means of the electrodes (76, 77).

12. Electro-optical device according to any of claims 1 to 9, wherein the electro-optical device (8; 100; 200) is a pn- or pin-junction modulator (200) and/or detector and the electrode (56, 57) is electrically connected to metal electrodes (60) arranged and designed to carry an RF signal.

13. Electro-optical device according to claim 12, wherein the electrode (56, 57) is arranged so that an RF signal applied to the metal electrodes (60) controls optical properties of the pn-/pin-junction confining the optical signal by applying an electric field on the pn-/pin-junction (54, 55) by means of the electrodes (56, 57).

14. Electro-optical device according to any of claims 1 to 9, wherein the electro-optical device (8; 100; 200) is a photodetector (8), in particular a silicon-germanium photodetector, and the electrode (4) is detecting photons by absorption.

15. Method for processing an optical signal in an electro-optical device, comprising the steps:

- processing the optical signal in the electro-optical device (8; 100; 200) so that the optical signal at least partially intrudes a electrode (4; 10; 56, 57; 76, 77),
- applying a voltage between the electrode (4; 10; 56, 57; 76, 77) and a gate (2, 5; 12; 51, 52; 71, 72) of the electro-optical device (8; 100; 200) such that a charge layer (6, 7; 10A) is induced at a face (4'; 10B; 56', 57'; 76', 77') of the electrode (4; 10; 56, 57; 76, 77) that is contacting an insulator (3; 11; 53; 73) arranged adjacent to the electrode (4; 10; 56, 57; 76, 77) so that one face (4'; 10B; 56', 57'; 76', 77') of the semiconductor electrode (4; 10; 56, 57; 76, 77) contacts the insulator (3; 11; 53; 73), and
- increasing the electrical conductivity of the electrode (4; 10; 56, 57; 76, 77) by applying the voltage between the electrode (4; 10; 56, 57; 76, 77) and the gate (2, 5; 12; 51, 52; 71, 72).

Fig. 1A

Fig. 1B

Fig. 1C

_100_

73  73
72  74  75  71  80
80
78  77
76'  76  77'  77  79
70
_81_

Fig. 2

_200_

53
52  54  55  51  60
60
58  57
56'  56  57'  57  59
50

Fig. 3

Fig. 4

Fig. 5

**Fig. 6**

**Fig. 7**

Europäisches
Patentamt

European
Patent Office

Office européen
des brevets

**EUROPEAN SEARCH REPORT**

Application Number

EP 11 00 3562

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/093204 A2 (OPTRONX INC [US]) 21 November 2002 (2002-11-21) * page 10 - page 15; figures 1-6 * | 1-4,6,8, 9,15 | INV. G02F1/025 H01L31/0224 |
| X | WO 2008/048002 A1 (KOREA ELECTRONICS TELECOMM [KR]; MHEEN BONGKI [KR]; PARK JEONG-WOO [KR]) 24 April 2008 (2008-04-24) * paragraphs [0012], [0029], [0042] - [0051], [0054]; figure 3 * | 1-9,12, 13,15 | |
| X | US 2005/175270 A1 (GUNN LAWRENCE C III [US] ET AL GUNN III LAWRENCE CARY [US] ET AL) 11 August 2005 (2005-08-11) * paragraph [0083]; figure 8 * | 1-9,15 | |
| X | WO 99/60629 A1 (SCHWARTE RUDOLF [DE]) 25 November 1999 (1999-11-25) * page 9 - page 12; figures 1,3 * | 1,14 | |
| A,D | WO 2008/034559 A1 (UNIV KARLSRUHE [DE]; KOOS CHRISTIAN [DE]; LEUTHOLD JUERG; FREUDE WOLFG) 27 March 2008 (2008-03-27) * page 22, line 10 - page 23, line 30 * * page 26, line 28 - page 27, line 5; claim 35; figure 2 * | 1,10,11 | TECHNICAL FIELDS SEARCHED (IPC) G02F H01L |

The present search report has been drawn up for all claims

| Place of search | Date of completion of the search | Examiner |
|---|---|---|
| The Hague | 22 September 2011 | Stang, Ingo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

    ...................................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 11 00 3562

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2011

| Patent document cited in search report | | Publication date | Patent family member(s) | | Publication date |
|---|---|---|---|---|---|
| WO 02093204 | A2 | 21-11-2002 | AU | 2002305612 A1 | 25-11-2002 |
| | | | CA | 2449860 A1 | 21-11-2002 |
| | | | CA | 2725883 A1 | 21-11-2002 |
| | | | EP | 1402298 A2 | 31-03-2004 |
| | | | EP | 2261953 A2 | 15-12-2010 |
| WO 2008048002 | A1 | 24-04-2008 | KR | 20080035386 A | 23-04-2008 |
| | | | US | 2009261383 A1 | 22-10-2009 |
| US 2005175270 | A1 | 11-08-2005 | US | 2003063885 A1 | 03-04-2003 |
| WO 9960629 | A1 | 25-11-1999 | AU | 5025599 A | 06-12-1999 |
| | | | BR | 9910523 A | 16-01-2001 |
| | | | CN | 1301401 A | 27-06-2001 |
| | | | DE | 19821974 A1 | 25-11-1999 |
| | | | EP | 1080500 A1 | 07-03-2001 |
| | | | JP | 2002516490 A | 04-06-2002 |
| | | | MX | PA00011286 A | 22-04-2003 |
| | | | US | 6777659 B1 | 17-08-2004 |
| WO 2008034559 | A1 | 27-03-2008 | DE | 102006045102 A1 | 10-04-2008 |
| | | | EP | 2074473 A1 | 01-07-2009 |
| | | | US | 2010021124 A1 | 28-01-2010 |

EPO FORM P0459

For more details about this annex : see Official Journal of the European Patent Office, No. 12/82

**EP 2 518 556 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100021124 A